# EUROPÄISCHE PATENTSCHRIFT

(11) **EP 0 643 085 B1**
(45) Veröffentlichungstag und Bekanntmachung des Hinweises auf die Patenterteilung: **29.04.1998**
(21) Anmeldenummer: 94113845.5
(22) Anmeldetag: 03.09.1994
(51) Int. Cl.: C08G 14/08, C08L 61/28, D01F 6/74, C08J 9/06

(54) **Wasserunlösliche Melamin-Formaldehyd-Harze**
Water-insoluble resins of melamine and formaldehyde
Résines mélamine-formaldéhyde insolubles dans l'eau

(30) Priorität: 11.09.1993 DE 4330910
(43) Veröffentlichungstag der Anmeldung: 15.03.1995
(73) Patentinhaber: BASF Aktiengesellschaft, 67063 Ludwigshafen (DE)
(72) Erfinder: Guenther, Erhard, Dr., D-67063 Ludwigshafen (DE); Reuther, Wolfgang, Dr., D-69118 Heidelberg (DE); Kirchgässner, Uwe, Dr., D-67227 Frankenthal (DE)

(56) Entgegenhaltungen:
- EP-A- 0 408 947
- EP-A- 0 523 485
- EP-A- 0 553 421

## Beschreibung

Die Erfindung betrifft wasserunlösliche Kondensationsprodukte, erhältlich durch Kondensation eines Gemisches, enthaltend als wesentliche Komponenten
(A) 80 bis 99,9 Mol-%, bezogen auf die Summe von (A), (B) und (C), eines Gemisches bestehend im wesentlichen aus
   (a) 30 bis 99 Mol-% Melamin und
   (b) 1 bis 70 Mol-% eines substituierten Melamins der allgemeinen Formel I 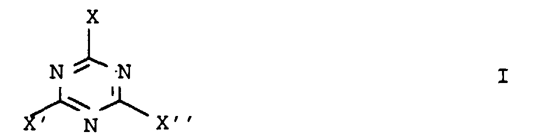 in der X, X' und X'' ausgewählt sind aus der Gruppe bestehend aus -NH₂, -NHR und -NRR', und X, X' und X'' nicht gleichzeitig -NH₂ sind, und R und R' ausgewählt sind aus der Gruppe bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen von Melaminen I,
(B) 0,1 bis 10 Mol-%, bezogen auf die Summe von (A), (B) und (C), eines Polyharnstoffs der allgemeinen Formel II 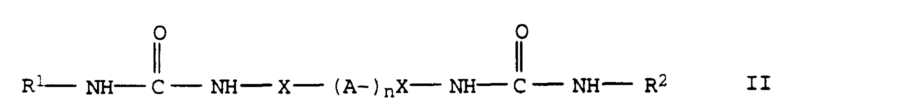 mit
   - A =: 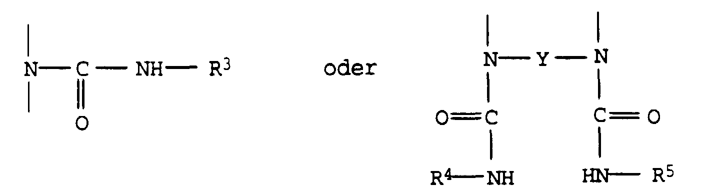
   - Y =: C₁-C₆-Alkylengruppe
   - n =: 0 oder 1
   - X =: C₁-C₆-Alkylengruppe, C₅-C₆-Cycloalkylengruppe C₁-C₆-Hydroxyalkylengruppe oder C₄-C₁₈-Oxyalkylengruppe
   - R¹ - R⁵ =: H oder CH₂OH
   und
(C) bis zu 10 Mol-%, bezogen auf die Summe von (A), (B) und (C), unsubstituierten oder mit Resten, ausgewählt aus der Gruppe aus C₁-C₉-Alkyl und Hydroxy, substituierten Phenolen, mit zwei oder drei Phenolgruppen substituierten C₁-C₄-Alkanen, Di(hydroxyphenyl)sulfonen oder Mischungen dieser Phenole,
mit
Formaldehyd oder Formaldehyd-liefernden Verbindungen, wobei das Molverhältnis von Melaminen zu Formaldehyd im Bereich von 1:1,15 bis 1:4,5 liegt.

Ferner betrifft die Erfindung ein Verfahren zur Herstellung dieser Kondensationsprodukte, deren Verwendung zur Herstellung von Fasern und Schaumstoffen und Formkörper, erhältlich aus diesen Produkten.

In der EP-A-553 421 ist die Verwendung der Polyharnstoffe gemäß Komponente (B)in Tränkharzlösungen zum Imprägnieren von Papierbahnen beschrieben.

Aus der DE-A-29 15 457, DE-A-23 64 091, EP-A-221 330 und EP-A-408 947 sind Formkörper wie Schaumstoffe und Fasern aus Melamin-Formaldehyd-Kondensationsharzen bekannt, in denen Melamin ganz oder teilweise durch substituierte Melamine wie hydroxyalkylsubstituierte oder hydroxyalkyl-oxa-alkylsubstituierte Melamine ersetzt ist.

Nachteilig an den bisher bekannten Melamin-Formaldehyd-Harzen ist ihre unzureichende Hydrolysestabilität verbunden mit der Abgabe von Formaldehyd in unerwünscht hohen Mengen. Daher wurde in der EP-A-523 485 die Kondensation in Gegenwart von unsubstituierten oder mit Resten, ausgewählt aus der Gruppe aus C₁-C₉-Alkyl und Hydroxy, substituierten Phenolen, mit zwei oder drei Phenolgruppen substituierten C₁-C₄-Alkanen, Di(hydroxyphenyl)sulfonen oder Mischungen dieser Phenole durchgeführt.

Der Erfindung lag daher die Aufgabe zugrunde, weitere Melamin-Formaldehyd-Kondensationsprodukte bereitzustellen, die in ausgehärteter Form die oben genannten Nachteile nicht aufweisen.

Demgemäß wurden die eingangs definierten Kondensationsprodukte gefunden.

Außerdem wurden ein Verfahren zur Herstellung dieser Kondensationsprodukte, deren Verwendung zur Herstellung von Fasern und Schaumstoffen sowie Formkörper, erhältlich aus diesen Produkten, gefunden.

Die erfindungsgemäßen Melamin-Harze enthalten als Komponente (A) 80 bis 99,9 Mol-% eines Gemisches bestehend im wesentlichen aus 30 bis 99, bevorzugt 50 bis 99, besonders bevorzugt 85 bis 95 Mol-% Melamin und 1 bis 70, bevorzugt 1 bis 50, besonders bevorzugt 5 bis 15 Mol-% eines substituierten Melamins I oder Mischungen substituierter Melamine I.

Als substituierte Melamine der allgemeinen Formel I 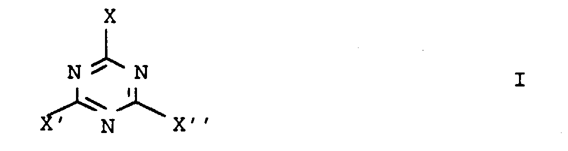 kommen solche in Betracht, in denen X, X' und X'' ausgewählt sind aus der Gruppe bestehend aus -NH₂, -NHR und -NRR', wobei X, X' und X'' nicht gleichzeitig -NH₂ sind, und R und R' ausgewählt sind aus der Gruppe bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl.

Als Hydroxy-C₂-C₁₀-alkyl-Gruppen wählt man bevorzugt Hydroxy-C₂-C₆-alkyl wie 2-Hydroxyethyl, 3-Hydroxy-n-propyl, 2-Hydroxyisopropyl, 4-Hydroxy-n-butyl, 5-Hydroxy-n-pentyl, 6-Hydroxy-n-hexyl, 3-Hydroxy-2,2-dimethylpropyl, bevorzugt Hydroxy-C₂-C₄-alkyl wie 2-Hydroxyethyl, 3-Hydroxy-n-propyl, 2-Hydroxyisopropyl und 4-Hydroxy-n-butyl, besonders bevorzugt 2-Hydroxyethyl und 2-Hydroxyisopropyl.

Als Hydroxy-C₂-C₄-alkyl-(oxa-C₂-C₄-alkyl)ₙ-Gruppen wählt man bevorzugt solche mit n = 1 bis 4, besonders bevorzugt solche mit n = 1 oder 2 wie 5-Hydroxy-3-oxa-pentyl, 5-Hydroxy-3-oxa-2,5-dimethyl-pentyl, 5-Hydroxy-3-oxa-1,4-dimethyl-pentyl, 5-Hydroxy-3-oxa-1,2,4,5-tetramethyl-pentyl, 8-Hydroxy-3,6-dioxa-octyl. Als Amino-C₂-C₁₂-alkyl-Gruppen kommen bevorzugt Amino-C₂-C₈-alkyl-Gruppen wie 2-Aminoethyl, 3-Aminopropyl, 4-Aminobutyl, 5-Aminopentyl, 6-Aminohexyl, 7-Aminoheptyl sowie 8-Aminooctyl, besonders bevorzugt 2-Aminoethyl und 6-Aminohexyl, ganz besonders bevorzugt 6-Aminohexyl, in Betracht.

Für die Erfindung besonders geeignete substituierte Melamine sind folgende Verbindungen: 2-Hydroxyethylamino-1,3,5-triazine wie 2-Hydroxyethylamino-1,3,5-triazin, 2,4-Di-(2-hydroxyethylamino)-1,3,5-triazin, 2,4,6-Tris-(2-hydroxyethylamino)-1,3,5-triazin, 2-Hydroxyisopropylamino-1,3,5-triazine wie 2-(2-Hydroxy-isopropylamino)-1,3,5-triazin, 2,4-Di-(2-hydroxyisopropylamino)-1,3,5-triazin, 2,4,6-Tris-(2-hydroxyisopropylamino)-1,3,5-triazin,5-Hydroxy-3-oxa-pentylamino-1,3,5-triazine wie 2-(5-Hydroxy-3-oxa-pentylamino)-1,3,5-triazin, 2,4-Di-(5-Hydroxy-3-oxa-pentylamino)-1,3,5-triazin, 2,4,6-Tris-(5-Hydroxy-3-oxa-pentylamino)-1,3,5-triazin sowie 6-Aminohexylamino-1,3,5-triazine wie 2-(6-Aminohexylamino-pentylamino)-1,3,5-triazin, 2,4-Di-(6-Aminohexylamino)-1,3,5-triazin, 2,4,6-Tris-(6-Amino-hexylamino)-1,3,5-triazin oder Gemische dieser Verbindungen, beispielsweise ein Gemisch aus 10 Mol-% 2-(5-Hydroxy-3-oxa-pentylamino)-1,3,5-triazin, 50 Mol-% 2,4-Di-(5-Hydroxy-3-oxa-pentylamino)-1,3,5-triazin und 40 Mol-% 2,4,6-Tris-(5-Hydroxy-3-oxa- pentylamino)-1,3,5-triazin.

Als Komponente (B) enthalten die wasserunlöslichen Melamin-Formaldehyd-Harze 0,1 bis 10 Mol-% eines Polyharnstoffs der allgemeinen Formel II, 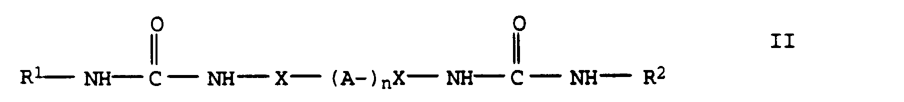 mit
- A =: 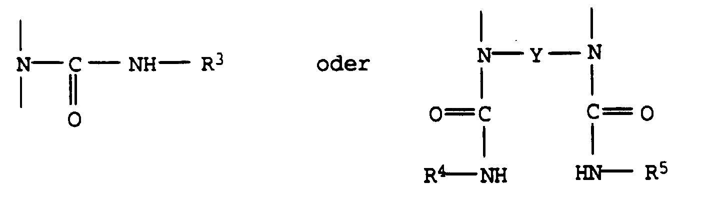
- Y =: C₁-C₆-Alkylengruppe
- n =: 0 oder 1
- X =: C₁-C₆-Alkylengruppe, C₅-C₆-cycloalkylengruppe C₁-C₆-Hydroxyalkylengruppe oder C₄-C₁₈-Oxyalkylengruppe
- R¹ - R⁵ =: H oder CH₂OH
Polyharnstoffe sowie ihre Herstellung sind beschrieben in Ullmann's Encyclopädie der Technischen Chemie, 3. Auflage, Band 8, Seite 389f.

Die Herstellung der Polyharnstoffe der Formel (II) erfolgt in wäßriger Lösung. Ein Polyamin mit primären oder sekundären Aminogruppen wird bei erhöhter Temperatur mit Harnstoff unter Abspaltung von Ammoniak zu dem entsprechenden Polyharnstoff umgesetzt.

Als Polyamine eignen sich Alkylendiamine, Dialkylentriamine, Polyalkylenpolyamine sowie funktionelle Polyamine, beispielsweise Ethylendiamin, Propylendiamin-1.3, Diethylentriamin, Dipropylentriamin, Triethylentetramin, Hexamethylendiamin, Etherdiamine, Polyetherdiamine usw.

zur Herstellung der Polyharnstoffe setzt man die Polyamine mit der theoretisch erforderlichen Menge, vorteilhaft jedoch mit einem geringen Überschuß, an Harnstoff in konzentrierter wäßriger Lösung bei Temperaturen zwischen 80°C und 120°C um. Die Reaktionszeit beträgt zwischen einer Stunde und 15 Stunden. Der während der Reaktion entstehende Ammoniak wird vorteilhaft unter Verwendung eines Inertgases, beispielsweise Stickstoff, aus dem Reaktionsgemisch entfernt. Sofern das Produkt nach Abkühlen auf Raumtemperatur auskristallisiert, kann durch mehrmaliges Waschen mit Eiswasser und wenig Methanol der analysenreine Polyharnstoff isoliert werden.

Die Polyharnstoffderivate können für die Kondensation je nach chemischer Zusammensetzung auch als 60 - 80 %ige wäßrige Lösungen eingesetzt werden. Zur Erhöhung der Wasserlöslichkeit eignen sich Umsetzungsprodukte mit Formaldehyd, bei denen pro Harnstoffgruppe 0,1 bis 0,9 Mol Formaldehyd für die Hydroxymethylierung der Harnstoffderivate eingesetzt wird. Eine ausreichende Erhöhung der Wasserlöslichkeit kann schon mit 0,1 bis 0,3 Mol Formaldehyd pro Harnstoffgruppe erreicht werden. Die so erhaltenen farblosen, wäßrigen, hydroxymethylierten Polyharnstofflösungen sind sehr gut lagerstabil.

Bevorzugte Polyharnstoffe sind:
- Dipropylentrisharnstoff 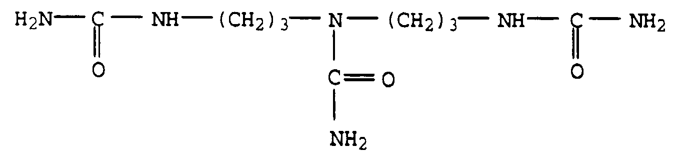
- Hexamethylendiharnstoff 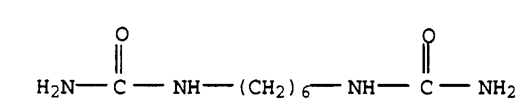
- 4,7-Dioxadecan-1,10-diharnstoff 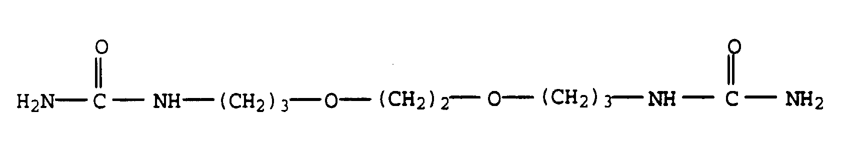
- Diethylentrisharnstoff

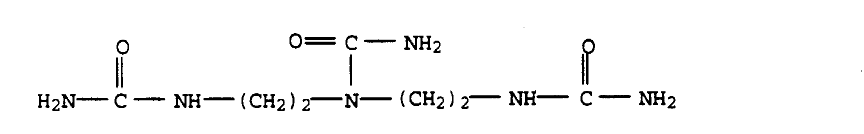

Als Komponente (C) enthalten die erfindungsgemäßen Melamin-Harze gegebenenfalls bis zu 10 Mol-%, vorzugsweise mindestens 0,1 Mol-%, eines Phenols oder eines Gemisches von Phenolen.

Als Phenole (C) eignen sich ein oder zwei Hydroxygruppen enthaltende Phenole wie unsubstituierte oder mit Resten, ausgewählt aus der Gruppe aus C₁-C₉-Alkyl und Hydroxy, substituierte Phenole sowie mit zwei oder drei Phenolgruppen substituierte C₁-C₄-Alkane, Di(hydroxyphenyl)sulfone oder Mischungen dieser Phenole.

Als bevorzugte Phenole kommen in Betracht Phenol, 4-Methylphenol, 4-tert.-Butyl-phenol, 4-n-Octyl-phenol, 4-n-Nonyl-phenol, Brenzcatechin, Resorcin, Hydrochinon, 2,2-Bis(4-hydroxyphenyl)propan, 4,4'-Dihydroxydiphenylsulfon. Besonders bevorzugt werden Phenol, Resorcin und/oder 2,2-Bis(4-hydroxyphenyl)propan eingesetzt.

Die erfindungsgemäßen Kondensationsprodukte sind erhältlich durch Umsetzung der Komponenten (A), (B) und gegebenenfalls (C) mit Formaldehyd oder Formaldehyd-liefernden Verbindungen, wobei das Molverhältnis von Melaminen zu Formaldehyd im Bereich von 1:1,15 bis 1:4,5, bevorzugt von 1:1,8 bis 1:3,0 liegt.

Formaldehyd setzt man in der Regel als wäßrige Lösung mit einer Konzentration von zum Beispiel 40 bis 50 Gew.-% oder in Form von bei der Umsetzung mit (A), (B) und gegebenenfalls (C) Formaldehyd liefernden Verbindungen, beispielsweise als oligomeren oder polymeren Formaldehyd in fester Form wie Paraformaldehyd, 1,3,5-Trioxan oder 1,3,5,7-Tetroxocan ein.

Für die Herstellung von Fasern verwendet man zweckmäßig 1 bis 50, vorzugsweise 5 bis 15 und insbesondere 7 bis 12 Mol-% des substituierten Melamins sowie vorzugsweise 0,1 bis 9,5, besonders bevorzugt 1 bis 5 Mol-% eines der oben angeführten Phenole oder Mischungen derselben.

Für die Herstellung von Schaumstoffen verwendet man zweckmäßig 0,5 bis 20, vorzugsweise 1 bis 10 und insbesondere 1,5 bis 5 Mol-% des substituierten Melamins oder Mischungen von substituierten Melaminen sowie vorzugsweise 0,1 bis 5, besonders bevorzugt 1 bis 3 Mol-% eines der oben angeführten Phenole oder Mischungen davon.

zur Herstellung der Harze polykondensiert man Melamin und substituiertes Melamin (Komponente A), Polyharnstoffe (Komponente B) und gegebenenfalls Phenole (Komponente C) zusammen mit Formaldehyd bzw. Formaldehyd-liefernden Verbindungen. Man kann dabei alle Komponenten gleich zu Beginn vorlegen oder man kann sie portionsweise und sukzessive zur Reaktion bringen und den dabei gebildeten Vorkondensaten nachträglich weitere Mengen dieser Komponenten zufügen.

Die Polykondensation führt man in der Regel in an sich bekannter Weise durch (s. EP-A-355 760, Houben-Weyl, Bd.14/2, S.357 ff).

Die Reaktionstemperaturen wählt man dabei im allgemeinen in einem Bereich von 20 bis 150, bevorzugt von 40 bis 140°C.

Der Reaktionsdruck ist in der Regel unkritisch. Man arbeitet im allgemeinen in einem Bereich von 100 bis 500 kPa, bevorzugt 100 bis 300 kPa.

Man kann die Reaktion mit oder ohne Lösungsmittel durchführen. In der Regel setzt man beim Einsatz von wäßriger Formaldehydlösung kein Lösungsmittel zu. Bei Verwendung von Formaldehyd gebunden in fester Form wählt man als Lösungsmittel üblicherweise Wasser, wobei die verwendete Menge in der Regel im Bereich von 5 bis 40, bevorzugt von 15 bis 25 Gew.-%, bezogen auf die Gesamtmenge an eingesetzten Komponenten (A) bis (C), liegt.

Ferner führt man die Polykondensation im allgemeinen in einem pH-Bereich oberhalb von 7 aus. Bevorzugt ist der pH-Bereich von 7,5 bis 10,0, besonders bevorzugt von 8 bis 10.

Des weiteren kann man dem Reaktionsgemisch geringe Mengen üblicher Zusätze wie Alkalimetallsulfite, z.B. Natriumdisulfit und Natriumsulfit, Alkalimetallformiaten, z.B. Natriumformiat, Alkalimetallcitrate, z.B. Natriumcitrat, Phosphate, Polyphosphate, Harnstoff, Dicyandiamid oder Cyanamid hinzufügen. Man kann sie als reine Einzelverbindungen oder als Mischungen untereinander jeweils in Substanz oder als wäßrige Lösungen vor, während oder nach der Kondensationsreaktion zusetzen.

Andere Modifizierungsmittel sind Amine sowie Aminoalkohole wie Diethylamin, Ethanolamin, Diethanolamin oder 2-Diethylaminoethanol.

Als weitere Zusatzstoffe kommen Füllstoffe, Emulgatoren oder Treibmittel in Betracht.

Als Füllstoffe kann man beispielsweise faser- oder pulverförmige anorganische Verstärkungsmittel oder Füllstoffe wie Glasfasern, Metallpulver, Metallsalze oder Silikate, z.B. Kaolin, Talkum, Schwerspat, Quarz oder Kreide, ferner Pigmente und Farbstoffe einsetzen. Als Emulgatoren verwendet man in der Regel die üblichen nichtionogenen, anionaktiven oder kationaktiven organischen Verbindungen mit langkettigen Alkylresten. Bei der Verarbeitung der nicht ausgehärteten Harze zu Schäumen kann man als Treibmittel beispielsweise Pentan einsetzen.

Die Polykondensation kann man diskontinuierlich oder kontinuierlich, beispielsweise in einem Extruder (s. EP-A 355 760), nach an sich bekannten Methoden durchführen.

Die Herstellung von Formkörpern durch Härtung der erfindungsgemäßen Kondensationsprodukte erfolgt in üblicher Weise durch Zusatz von geringen Mengen an Säuren wie Ameisensäure, Schwefelsäure oder Ammoniumchlorid.

Schaumstoffe können hergestellt werden, indem man eine wäßrige Lösung oder Dispersion, welche das noch nicht ausgehärtete Kondensat, einen Emulgator, ein Treibmittel und einen Harter, sowie gegebenenfalls übliche Zusatzstoffe, wie oben aufgeführt, enthält, verschäumt und anschließend den Schaum aushärtet. Ein solches Verfahren ist in der DE-A-29 15 457 eingehend beschrieben.

Zur Herstellung von Fasern verspinnt man in der Regel das erfindungsgemäße Melamin-Harz in an sich bekannter Weise beispielsweise nach Zusatz eines Härters bei Raumtemperatur in einer Rotationsspinnapparatur und härtet anschließend die Rohfasern in einer erhitzten Atmosphäre aus, oder man verspinnt in einer erhitzten Atmosphäre, verdampft dabei gleichzeitig das als Lösungsmittel dienende Wasser und härtet das Kondensat aus. Ein solches Verfahren ist in der DE-A-23 64 091 eingehend beschrieben.

Die erhaltenen Schäume und Fasern zeichnen sich durch eine verbesserte Hydrolysestabilität und eine reduzierte Formaldehyd-Emission aus.

### Beispiele

Die nach den jeweiligen Kondensationsreaktionen erhaltenen erfindungsgemäßen Harzmassen wurden mit jeweils 2 Gew.-% (bezogen auf das Gesamtgewicht) einer 35 gew.-%igen Ameisensäure als Härter versetzt und dann bei 30°C durch eine Rotationsspinnapparatur mit einem Düsendurchmesser von 500 µm gedrückt. Die so erhaltenen Rohfasern wurden anschließend während 1,5 h auf 230°C erhitzt. Dabei fielen Fasern mit einem Durchmesser von 5 bis 50 µm und einer Länge von 1 bis 20 cm an.

Die in den Beispielen angegebenen Viskositätswerte wurden mit einem Kegel/Platte-Viskosimeter (Fa. Epprecht Instruments+Controls, Meßkegel "Typ D") bei einem Schergefälle von 20 sec⁻¹ bei einer Temperatur von 20°C bestimmt.

Die Formaldehyd-Emission wurde nach der Testmethode 112 - 1978 der American Association of Textile Chemists and Colorists (AATCC) bestimmt.

Hierbei wurden jeweils eine genau abgewogene Menge an Produkt (ca. 1 g) in einer Glasfritte in einem geschlossenen Gefäß, das 50 ml Wasser enthielt, so angeordnet, daß die Probe mit dem Wasser nicht in direkte Berührung kam. Danach wurden die Probengefäße während 20 h auf eine Temperatur von 49±1°C erhitzt. Dann wurde jeweils während ca. 90 min auf Raumtemperatur abkühlen gelassen, die Proben aus den Gefäßen entnommen und das jeweilige Probengefäß geschüttelt. Anschließend wurden jeweils 1 ml der Probenlösung mit 10 ml einer wäßrigen Reagenzlösung enthaltend 1,5 g Ammoniumacetat, 0,03 ml Eisessig und 0,02 ml Acetylaceton versetzt und 7 min bei 58°C im Wasserbad erhitzt. Hierbei bildeten sich je nach Formaldehyd-Gehalt mehr oder weniger gelb gefärbte Lösungen, deren Extinktionen nach dem Abkühlen (ca. 30 min) bei 412 nm in einem Spektralphotometer gemessen wurden.

Vor Beginn der Messung wurde der Nullpunkt des Photometers mit einer Blindprobe (10 ml Reagenzlösung + 1 ml dest. Wasser) eingestellt.

Zur Bestimmung des Formaldehyd-Gehaltes wurde mit Hilfe von Standardlösungen, die einen definierten Gehalt an Formaldehyd aufwiesen und deren Extinktionen nach der oben beschriebenen Methode ermittelt wurden, eine Eichkurve erstellt, aus der sich dann bei gegebenem Extinktionswert die Konzentration an Formaldehyd ermitteln ließ.

Zur Prüfung der Hydrolysebeständigkeit wurden jeweils ca. 3 g Fasern für 24 h in 1 l Wasser zum Rückfluß erhitzt. Danach wurden die Fasern bei 90°C im Trockenschrank bis zur Gewichtskonstanz getrocknet.

### Beispiel 1

### Melamin-Harz mit 4,7-Dioxadekan-1,10-diharnstoff

1871 g (14,8 mol) Melamin, 432 g (1,48 mol) 4,7-Dioxadekan-1,10-diharnstoff, 434 g Paraformaldehyd, 40,9 g Phenol und 8,25 ml Diethylaminoethanol wurden mit 1389 g einer 40 gew.-%igen wäßrigen Formaldehydlösung gemischt. Die Reaktionsmischung wurde dann solange zum Rückfluß erhitzt, bis sie eine Viskosität von 1300 Pa*sec aufwies. Die Bestimmung der Formaldehyd-Emission und des Gewichtsverlusts ergab folgende Werte:

| | |
|---|---|
| Formaldehydemission | 330 ppm |
| Gew.-Verlust durch Hydrolyse | 0 Gew.-% |

### Beispiel 2

### Melamin-Harz mit Dipropylenharnstoff

1871 g (14,8 mol) Melamin, 557,2 g (1,48 mol) Dipropylentrisharnstoff (mit Formaldehyd im Molverhältnis DPTH:Fo = 1:0,5 anmethyloliert), 499,6 g Paraformaldehyd, 40,9 g Phenol, 24,75 ml Diethylaminoethanol und 1164,1 g einer 40 gew.-%igen wäßrigen Formaldehydlösung wurden gemischt. Die Reaktionsmischung wurde dann solange zum Rückfluß erhitzt, bis sie eine Viskosität von 1300 Pa*sec aufwies. Die Bestimmung der Formaldehyd-Emission und des Gewichtsverlusts ergab folgende Werte:

| | |
|---|---|
| Formaldehydemission | 300 ppm |
| Gew.-Verlust durch Hydrolyse | 0-1 Gew.-% |

### Vergleichsbeispiel 1 (siehe EP-A-523 485)

### Melamin-Harz ohne Polyharnstoff

1769 g (14,03 mol) Melamin und 618 g einer 80 gew.-%igen, wäßrigen Lösung von Tris-(5-Hydroxy-3-oxa-pentylamino)-1,3,5-triazin ("HOM") (1,50 mol) wurden mit 557,7 g Paraformaldehyd, 6,9 g 2-Diethylamino-ethanol und 1063 g einer 40 gew.-%igen, wäßrigen Formaldehydlösung gemischt. Die Reaktionsmischung wurde dann solange zum Rückfluß erhitzt, bis sie eine Viskosität von 500 Pa*sec aufwies. Die Bestimmung der Formaldehyd-Emission und des Gewichtsverlustes ergab folgende Werte:

| | |
|---|---|
| Formaldehydemission | 675 ppm |
| Gew.-Verlust durch Hydrolyse | 14 Gew.-% |

### Vergleichsbeispiel 2 (siehe EP-A-523 485)

### Melamin-Harz mit 3 Mol-% Phenol, ohne Polyharnstoff

1791,7 g (14,22 mol) Melamin und 626,1 g einer 80 gew.-%igen, wäßrigen Lösung von HOM (1,52 mol) und 44,6 g (0,47 mol) Phenol wurden zusammen mit 557,9 g Paraformaldehyd, 7,0 g 2-Diethylamino-ethanol und 1093,9 g einer 40 gew.-% waßrigen Formaldehydlösung gemischt. Die Reaktionsmischung wurde dann solange zum Rückfluß erhitzt, bis sie eine Viskosität von 500 Pa*sec aufwies. Die Bestimmung der Formaldehyd-Emission und des Gewichtsverlustes ergab folgende Werte:

| | |
|---|---|
| Formaldehydemission | 430 ppm |
| Gew.-Verlust durch Hydrolyse | 10 Gew.-% |

## Patentansprüche

1. Wasserunlösliche Kondensationsprodukte, erhältlich durch Kondensation eines Gemisches, enthaltend als wesentliche Komponenten
(A) 80 bis 99,9 Mol-%, bezogen auf die Summe von (A), (B) und (C), eines Gemisches bestehend im wesentlichen aus
(a) 30 bis 99 Mol-% Melamin und
(b) 1 bis 70 Mol-% eines substituierten Melamins der allgemeinen Formel I 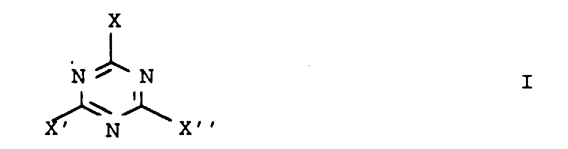 in der X, X' und X'' ausgewählt sind aus der Gruppe bestehend aus -NH₂, -NHR und -NRR', und X, X' und X'' nicht gleichzeitig -NH₂ sind, und R und R' ausgewählt sind aus der Gruppe bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen von Melaminen I,
(B) 0,1 bis 10 Mol-%, bezogen auf die Summe von (A), (B) und (C), eines Polyharnstoffs der allgemeinen Formel II 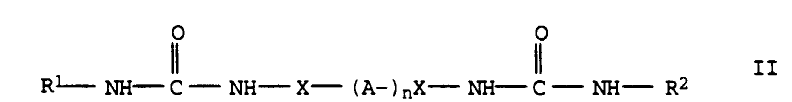 mit
A = 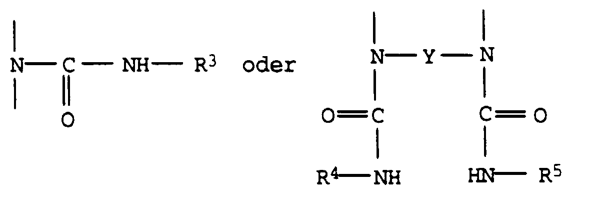
Y = C₁-C₆-Alkylengruppe
n = 0 oder 1
X = C₁-C₆-Alkylengruppe, C₅-C₆-Cycloalkylengruppe C₁-C₆-Hydroxyalkylengruppe oder C₄-C₁₈-Oxyalkylengruppe
R¹ - R⁵ = H oder CH₂OH
und
(C) bis zu 10 Mol-%, bezogen auf die Summe von (A), (B) und
(C), unsubstituierten oder mit Resten, ausgewählt aus der Gruppe aus C₁-C₉-Alkyl und Hydroxy, substituierten Phenolen, mit zwei oder drei Phenolgruppen substituierten C₁-C₄-Alkanen, Di(hydroxyphenyl)sulfonen oder Mischungen dieser Phenole,
mit
Formaldehyd oder Formaldehyd-liefernden Verbindungen, wobei das Molverhältnis von Melaminen zu Formaldehyd im Bereich von 1:1,15 bis 1:4,5 liegt.

2. Kondensationsprodukte nach Anspruch 1, dadurch gekennzeichnet, daß mindestens 0,1 Mol-% an Komponente (C), bezogen auf die Summe von (A), (B) und (C), eingesetzt wird.

3. Kondensationsprodukte nach Anspruch 1 oder 2, dadurch gekennzeichnet, daß man einen gegebenenfalls anmethylolierten Polyharnstoff aus der Gruppe aus 4,7-Dioxadekan-1,10-diharnstoff und Dipropylentrisharnstoff verwendet.

4. Kondensationsprodukte nach einem der Ansprüche 1 bis 3, dadurch gekennzeichnet, daß man als substituiertes Melamin 2-Hydroxyethylamino-1,3,5-triazine, 2-Hydroxyisopropylamino-1,3,5-triazine, 5-Hydroxy-3-oxa-pentylamino-1,3,5-triazine oder 6-Amino-hexylamino-1,3,5-triazine einsetzt.

5. Kondensationsprodukte nach einem der Ansprüche 1 bis 4, dadurch gekennzeichnet, daß man ein Phenol, ausgewählt aus der Gruppe aus Phenol, 2,2-Bis(4-hydroxyphenyl)propan und Resorcin, einsetzt.

6. Verfahren zur Herstellung von Kondensationsprodukten gemäß Anspruch 1, dadurch gekennzeichnet, daß man die Komponenten (A), (B) und gegebenenfalls (C) mit Formaldehyd oder Formaldehyd-liefernden Verbindungen bei 20 bis 150°C und Drücken von 100 bis 500 kPa in Masse oder in einem Lösungsmittel kondensiert.

7. Verwendung der Kondensationsprodukte gemäß Anspruch 1 zur Herstellung von Formkörpern, insbesondere Fasern und Schaumstoffe.

8. Formkörper, erhältlich durch die Verwendung gemäß Anspruch 7.

## Claims

1. Water-insoluble condensation products obtainable by condensation of a mixture comprising as essential components
(A) from 80 to 99.9 mol%, based on the sum of (A), (B) and (C), of a mixture consisting essentially of
(a) from 30 to 99 mol% of melamine and
(b) from 1 to 70 mol% of a substituted melamine of the general formula I 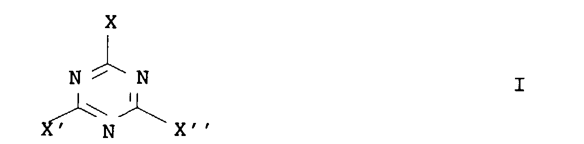 where X, X' and X" are each selected from the group consisting of -NH₂, -NHR and -NRR', and X, X' and X" are not all -NH₂ at one and the same time, and R and R' are each selected from the group consisting of hydroxy-C₂-C₁₀-alkyl, hydroxy-C₂-C₄-alkyl-(oxa-C₂-C₄-alkyl)ₙ, where n is from 1 to 5, and amino-C₂-C₁₂-alkyl, or mixtures of melamines I,
(B) from 0.1 to 10 mol%, based on the sum of (A), (B) and (C), of a polyurea of the general formula II 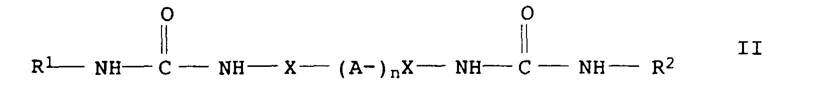 where
A = 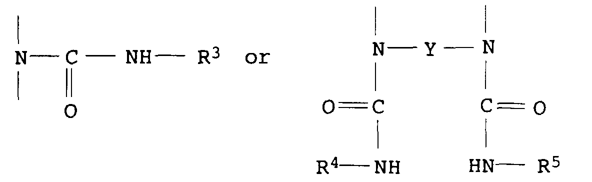
Y = C₁-C₆-alkylene,
n = 0 or 1,
X = C₁-C₆-alkylene, C₅-C₆-cycloalkylene, C₁-C₆-hydroxyalkylene or C₄-C₁₈-oxyalkylene, and
R¹ - R⁵ are each H or CH₂OH
and
(C) up to 10 mol%, based on the sum of (A), (B) and (C), of phenols which are unsubstituted or substituted by radicals selected from the group consisting of C₁-C₉-alkyl and hydroxyl, C₁-C₄-alkanes substituted by two or three phenol groups, di(hydroxyphenyl) sulfones or mixtures of these phenols, with
formaldehyde or formaldehyde source compounds in a molar ratio of melamines to formaldehyde within the range from 1:1.15 to 1:4.5.

2. Condensation products as claimed in claim 1, wherefor at least 0.1 mol% of component (C), based on the sum of (A), (B) and (C), is used.

3. Condensation products as claimed in claim 1 or 2, wherefor a completely or partially methylolated or unmethylolated polyurea selected from the group consisting of 4,7-dioxa-decane-1,10-diurea and dipropylenetrisurea is used.

4. Condensation products as claimed in any of claims 1 to 3, wherefor the substituted melamine used is a 2-hydroxyethylamino-1,3,5-triazine, a 2-hydroxyisopropylamino-1,3,5-triazine, a 5-hydroxy-3-oxapentylamino-1,3,5-triazine or a 6-aminohexylamino-1,3,5-triazine.

5. Condensation products as claimed in any of claims 1 to 4, wherefor a phenol selected from the group consisting of phenol, 2,2-bis(4-hydroxyphenyl)propane and resorcinol is used.

6. A process for producing condensation products as claimed in claim 1, which comprises condensing the components (A), (B) and if desired (C) with formaldehyde or formaldehyde source compounds at from 20 to 150°C and pressures from 100 to 500 kPa in a solvent or without a solvent.

7. The use of the condensation products of claim 1 for producing shaped articles, in particular fibers and foams.

8. Shaped articles obtainable by the use of claim 7.

## Revendications

1. Produits de condensation insolubles dans l'eau, que l'on peut obtenir par la condensation d'un mélange qui contient, à titre de composants essentiels,
(A) 80 à 99,9% molaires, par rapport à la somme de (A), (B) et (C), d'un mélange qui se compose, pour l'essentiel, de
(a) 30 à 90% molaires de mélamine et
(b) 1 à 70% molaires d'une mélamine substituée de la formule générale I 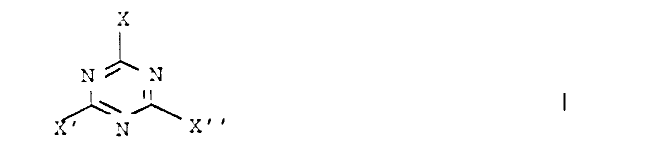 dans laquelle X, X' et X" sont choisis dans le groupe formé par les radicaux -NH₂, -NHR et -NRR' et X, X' et X" ne sont pas simultanément -NH₂ et R et R' sont choisis dans le groupe formé par les radicaux hydroxyalkyle en C₂ à C₁₀, hydroxyalkyl(C₂-C₄)-(oxaalkyl(C₂-C₄))ₙ, avec n = 1 à 5 et aminoalkyle en C₂ à C₁₂, ou des mélanges de mélamines I,
(B) 0,1 à 10% molaires, par rapport à la somme de (A), (B) et (C) d'une polyurée de la formule générale II 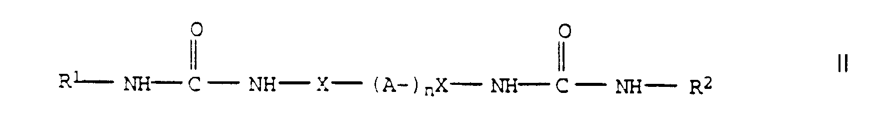 où
A = 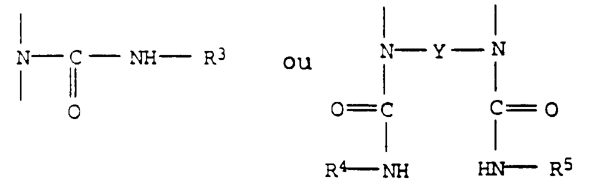
Y = radical alkylène en C₁ à C₆
n = 0 ou 1
X = radical alkylène en C₁ à C₆ radical cycloalkylène en C₅-C₆ radical hydroxyalkylène en C₁ à C₆ ou radical oxyalkylène en C₄ à C₁₈
R¹-R⁵= H ou CH₂OH
et
(c) jusqu'à 10% molaires, par rapport à la somme de (A), (B) et (C) de phénols non substitués ou substitués avec des restes choisis dans le groupe formé par les radicaux alkyle en C₁ à C₉ et hydroxyle, d'alcanes en C₁ à C₄ substitués par deux ou trois groupes phénol, de di(hydroxyphényl)sulfones ou de mélanges de ces phénols,
avec
le formaldéhyde ou des composés donnant du formaldéhyde, où le rapport molaire des mélamines au formaldéhyde varie de 1:1,15 à 1:4,5.

2. Produits de condensation suivant la revendication 1, caractérisés en ce que l'on utilise au moins 0,1% molaire du composant (C), par rapport à la somme de (A), de (B) et de (C).

3. Produits de condensation suivant la revendication 1 ou 2, caractérisés en ce que l'on utilise une polyurée éventuellement méthylolée appartenant au groupe de la 4,7-dioxadécane-1,10-diurée et de la dipropylènetrisurée.

4. Produits de condensation suivant l'une quelconque des revendications 1 à 3, caractérisés en ce que l'on utilise, à titre de mélamine substituée, des 2-hydroxyéthylamino-1,3,5-triazines, des 2-hydroxyisopropylamino-1,3,5-triazines, des 5-hydroxy-3-oxapentylamino-1,3,5-triazines ou des 6-aminohexylamino-1,3,5-triazines.

5. Produits de condensation suivant l'une quelconque des revendications 1 à 4, caractérisés en ce que l'on utilise un phénol choisi dans le groupe formé par le phénol, le 2,2-bis(4-hydroxyphényl)propane et la résorcine.

6. Procédé de préparation de produits de condensation suivant la revendication 1, caractérisé en ce que l'on condense les composants (A), (B) et éventuellement (C) avec le formaldéhyde ou des composés donnant du formaldéhyde, à une température de 20 à 150°C et sous des pressions de 100 à 500 kPa, dans la masse ou dans un solvant.

7. Utilisation des produits de condensation suivant la revendication 1, pour la fabrication d'articles moulés, plus particulièrement, de fibres et de mousses.

8. Articles moulés que l'on peut obtenir par l'utilisation suivant la revendication 7.
